# DEMANDE DE BREVET EUROPEEN

(11) **EP 3 272 256 A1**
(43) Date de publication de la demande: **24.01.2018**
(21) Numéro de dépôt: 17182681.1
(22) Date de dépôt: 21.07.2017
(51) Int. Cl.: A47J 27/04, A47J 27/17

(54) **PANIER À VAPEUR ET CUISEUR ÉLECTRIQUE**

(30) Priorité: 22.07.2016 FR 1657069
(71) Demandeur: SEB S.A., 69130 Ecully (FR)
(72) Inventeur: MA, Chao, Hangzhou, Zhejiang 310051 (CN); LV, Hua, Hangzhou, Zhejiang 310051 (CN)
(74) Mandataire: Cémeli, Eric Philippe Laurent

(57) **Abrégé**

Cuiseur électrique comprenant un panier à vapeur qui comprend :
- un cylindre de remplissage (10), lequel cylindre de remplissage (10) étant pourvu d'une chambre de remplissage (11), et une paroi du fond (12) dudit cylindre de remplissage (10) comprenant une zone perméable ; la zone perméable de la paroi du fond (12) étant percée de plusieurs trous de passage de l'eau (122) qui traversent la paroi du fond (12) ;
- un cylindre de passage de l'eau (20) situé sous le cylindre de remplissage (10), le cylindre de passage de l'eau (20) et le cylindre de remplissage (10) formant une seule et même structure ; l'extrémité du cylindre de passage de l'eau (20) opposée au cylindre de remplissage (10) comprenant un mécanisme d'ouverture ; la zone perméable étant située sur la zone de la paroi du fond (12) entourée par le cylindre de passage de l'eau (20).
caractérisé en ce qu'il comprend un boîtier externe (1), un récipient interne (2) disposé à l'intérieur du boîtier externe (1), le panier à vapeur étant installé à l'intérieur du récipient interne (2), la partie supérieure du cylindre de remplissage (10) de ce panier à vapeur étant hermétiquement abouchée à l'ouverture du récipient interne (2).

## Description

La présente invention concerne le domaine de la cuisson des aliments, il concerne concrètement un panier à vapeur et un cuiseur électrique.

Il est connu du document US5097753 A, un cuiseur électrique comportant un panier à vapeur qui comprend un cylindre de remplissage, lequel cylindre de remplissage étant pourvu d'une chambre de remplissage, et une paroi du fond dudit cylindre de remplissage comprenant une zone perméable ; la zone perméable de la paroi du fond étant percée de plusieurs trous de passage de vapeur qui traversent la paroi du fond ; et un cylindre de passage de vapeur situé sous le cylindre de remplissage, le cylindre de passage de vapeur et le cylindre de remplissage formant une seule et même structure ; l'extrémité du cylindre de passage de vapeur opposée au cylindre de remplissage comprenant un mécanisme d'ouverture ; la zone perméable étant située sur la zone de la paroi du fond entourée par le cylindre de passage de vapeur.

Les cuiseurs électriques pour cuire le riz, comme les cuiseurs à riz actuels, comportent un récipient interne à l'intérieur duquel est disposé un panier à vapeur, le riz est placé dans le panier à vapeur, l'eau dans le récipient interne. On chauffe le récipient interne afin de porter l'eau se trouvant dans le récipient interne à ébullition pour qu'elle pénètre dans le panier à vapeur et vienne rincer le riz, ceci jusqu'à ce que le niveau de l'eau baisse en-dessous du panier à vapeur. On procède ensuite à la séparation du riz et de l'eau. Puis, on continue de chauffer, et on emploie la vapeur générée pour cuire le riz à la vapeur, et l'eau du rinçage aura emporté une partie du sucre contenue dans le riz avec l'eau de riz pour obtenir ainsi un riz cuit à faible teneur en sucre.

L'utilisation des paniers à vapeur existant actuellement présente certains inconvénients, lesquels inconvénients viennent de ce qu'ils utilisent uniquement de l'eau bouillante, ce qui est peu favorable au contact entier de l'eau et du riz. La méthode dans laquelle l'eau entre dans le panier à vapeur pour venir rincer le riz ou faire en sorte que le riz absorbe l'eau ne permet pas de garantir qu'une quantité suffisante d'eau entre dans le panier à vapeur, ce qui conduit à l'impossibilité pour une partie du riz d'entrer en contact avec l'eau et donc à l'impossibilité de procéder efficacement au rinçage du riz et à l'absorption de l'eau par le riz, ce qui affecte au final la texture en bouche du riz obtenu. En outre, les structures actuelles de panier à vapeur ne permettent pas non plus de garantir la bonne réalisation du processus de séparation de l'eau et du riz, ce qui rend difficile l'obtention d'un riz à indice glycémique (IG) (sucre) bas.

L'objectif de la présente invention est de fournir un panier vapeur et un cuiseur électrique permettant de résoudre les difficultés techniques des cuiseurs électriques actuels de réalisation stable du processus de contact de l'eau et du riz ou de séparation de l'eau et du riz qui entraînent l'impossibilité de cuire un riz à indice glycémique (IG) bas.

Cet objectif est atteint par l'intermédiaire d'un panier à vapeur, caractérisé en ce qu'il comprend :
- un cylindre de remplissage, lequel cylindre de remplissage est pourvu d'une chambre de remplissage, et une paroi du fond dudit cylindre de remplissage comprend une zone perméable ; la zone perméable de la paroi du fond est percée de plusieurs trous de passage de l'eau qui traversent la paroi du fond;
- un cylindre de passage de l'eau situé sous le cylindre de remplissage, le cylindre de passage de l'eau et le cylindre de remplissage formant une seule et même structure ; l'extrémité du cylindre de passage de l'eau opposée au cylindre de remplissage comprend un mécanisme d'ouverture ; la zone perméable est située sur la zone de la paroi du fond entourée par le cylindre de passage de l'eau.

Selon une autre variante de réalisation, le cylindre de passage de l'eau présente une forme tubulaire droite ou une forme conique.

Selon une autre variante de réalisation, le cylindre de passage de l'eau est installé au centre géométrique de la paroi du fond.

Selon une autre variante de réalisation, le cylindre de passage de l'eau présente une symétrie axiale avec la projection orthogonale de la paroi du fond.

Selon une autre variante de réalisation, la paroi du fond présente une structure plane.

Selon une autre variante de réalisation, la paroi du fond présente une structure incurvée, et un côté de la paroi du fond présentant une structure incurvée étant bombé vers ou dans la direction opposée à la chambre de remplissage.

Selon une autre variante de réalisation, le rapport entre la surface d'ouverture S1 du mécanisme d'ouverture et la section transversale S de la chambre de remplissage du cylindre de remplissage est supérieur ou égal à 0,05 et inférieur ou égal à 1,5.

Selon une autre variante de réalisation, le rapport de la surface d'ouverture S1 du mécanisme d'ouverture et la section transversale S de la chambre de remplissage du cylindre de remplissage est supérieur ou égal à 0,3 et inférieur ou égal à 0,8.

L'invention concerne également un cuiseur électrique caractérisé en ce qu'il comprend :
- un boîtier externe ;
- un récipient interne disposé à l'intérieur du boîtier externe ;
- un panier à vapeur défini selon l'une au moins des variantes de réalisation définies précédemment, lequel panier à vapeur est installé à l'intérieur du récipient interne, la partie supérieure du cylindre de remplissage de ce panier à vapeur étant hermétiquement abouchée à l'ouverture du récipient interne.

Selon une autre variante de réalisation, un joint d'étanchéité est placé entre la partie supérieure du cylindre de remplissage du panier à vapeur et l'ouverture du récipient interne.

Selon une autre variante de réalisation, le rapport entre la hauteur allant du mécanisme d'ouverture du cylindre de passage de l'eau du panier à vapeur jusqu'au fond du récipient interne et la profondeur H du récipient interne est supérieur ou égal à 0,1 et inférieur ou égal à 0,8.

Selon une autre variante de réalisation, la paroi du fond du panier à vapeur présente une structure plate ou incurvée, et le rapport entre la hauteur allant du mécanisme d'ouverture du cylindre de passage de l'eau jusqu'au point le plus bas de la zone perméable de la paroi du fond et la profondeur du récipient interne est supérieur ou égal à 0,1 et inférieur ou égal à 0,8.

Selon une autre variante de réalisation, la paroi du fond du panier à vapeur présente une structure plate ou incurvée, et le rapport entre la hauteur allant du point le plus bas de la zone perméable de la paroi du fond jusqu'au bord supérieur du récipient interne et la profondeur du récipient interne est supérieur ou égal à 0,1 et inférieur ou égal à 0,8.

Dans l'application du plan technique de la présente invention, étant donné que la paroi du fond du cylindre de remplissage du panier à vapeur comporte une zone perméable, l'eau se trouvant à l'intérieur du récipient interne, est, sous l'action de la pression, envoyée à travers les orifices de passage de l'eau de cette zone perméable jusque dans la chambre de remplissage ou évacuée hors de la chambre de remplissage, ainsi l'on peut réaliser de manière répétée le trempage et le rinçage du riz à l'intérieur de la chambre de remplissage, ceci afin de réduire la teneur en sucre du riz.

Après qu'on a placé le panier à vapeur dans le récipient interne, la partie supérieure du cylindre de remplissage est hermétiquement abouchée à l'ouverture du récipient interne. Dans la phase préliminaire, le niveau de l'eau se trouvant à l'intérieur du récipient interne est supérieur au mécanisme d'ouverture du couvercle de fond, de sorte à former un espace hermétique entre le panier à vapeur et le récipient interne. Lorsqu'on chauffe le récipient interne, la pression à l'intérieur de l'espace hermétique croît, et l'eau est, sous l'action de la pression, envoyée à travers le mécanisme d'ouverture et la cavité de passage de l'eau jusque dans la chambre de remplissage pour entrer en contact avec le riz et réaliser le rinçage, le trempage, la cuisson à l'eau et l'absorption de l'eau par le riz, puis le niveau d'eau ayant baissé, lorsque l'eau se retire de la chambre de remplissage, l'eau est séparée du riz se trouvant dans la chambre de remplissage. Le processus de rinçage ou le processus de cuisson à l'eau du riz avec l'eau se trouvant dans le récipient interne est ainsi mené à bien, on passe ensuite au processus suivant de cuisson à la vapeur du riz.

Il faut préciser que, lorsque le niveau de l'eau baisse jusqu'à atteindre le mécanisme d'ouverture, l'espace hermétique entre le panier à vapeur et le récipient interne n'est plus hermétique, cet espace désormais non-hermétique est relié à la cavité de passage de l'eau et à la chambre de remplissage. La vapeur qui s'élève entre par le mécanisme d'ouverture dans la chambre de remplissage, ou bien après être entrée dans l'espace hermétique, entre ensuite par le mécanisme d'ouverture jusque dans la chambre de remplissage, pour procéder à la cuisson vapeur du riz. A ce moment-là, comme l'espace hermétique a perdu son hermétisme, la vapeur ne s'accumulera pas dans l'espace hermétique et la pression à l'intérieur de l'espace hermétique ne croîtra pas de manière continue. Autrement dit, la vapeur à l'intérieur de l'espace hermétique ayant perdu son hermétisme est incapable de comprimer l'eau hors du récipient interne pour l'envoyer vers la chambre de remplissage.

Dans l'usage du cuiseur électrique de la présente invention, le contrôle du nombre d'entrées ou de sorties de l'eau dans ou hors de la chambre de remplissage, de la température de l'eau et du temps de rétention de l'eau à l'intérieur de la chambre de remplissage permet au cuiseur électrique de réaliser de manière automatique le processus de rinçage du riz et d'absorption de l'eau par le riz, de manière que le cuiseur électrique cuise un riz à indice glycémique (IG) bas plus nutritif, et à augmenter le degré de satisfaction des consommateurs relativement au processus de cuisson. Aussi, le cuiseur électrique de la présente invention est multifonction, largement automatisé et pratique à l'usage.

Les figures annexes qui constituent une partie intégrante de la présente demande sont destinées à améliorer la compréhension de la présente invention, les exemples d'applications schématiques de la présente invention et leurs explications sont destinés à expliquer la présente invention, sans pour autant constituer de restriction inappropriée de la présente invention. Dans les figures annexes:
La figure 1 est le schéma structurel d'un cuiseur à riz selon un exemple d'application possible de la présente invention.
La figure 2 est le schéma d'assemblage du récipient interne, du joint d'étanchéité et du panier à vapeur du cuiseur à riz de la figure 1.
La figure 3 est le schéma structurel du joint d'étanchéité et du panier à vapeur de la figure 2 lorsque ces deux parties sont séparées.
La figure 4 est le schéma structurel du panier à vapeur de la figure 3.
La figure 5 est le schéma du statut de cuisson lorsque l'eau à l'intérieur du récipient interne du cuiseur à riz de la figure 1 est sortie hors de la chambre de remplissage du panier à vapeur.
La figure 6 est le schéma du statut de cuisson lorsque l'eau à l'intérieur du récipient interne du cuiseur à riz de la figure 1 est entrée dans la chambre de remplissage du panier à vapeur.

Il faut préciser qu'en l'absence d'incompatibilité, les exemples d'applications de la présente demande et les caractéristiques de ces exemples d'applications peuvent être mutuellement combinées. On va ci-dessous expliquer de manière concise la présente invention au moyen des figures annexes de référence combinées à des exemples d'applications.

Il faut noter que les explications détaillées ci-dessous sont toutes fournies à titre d'exemples dans le but de fournir une explication plus poussée de la présente invention. Sauf mention contraire, tous les termes techniques et scientifiques employés ici ont l'acception courante telle qu'admise par le personnel technique ordinaire du domaine technique duquel relève la présente demande.

Dans la présente invention, en l'absence d'indication inverse, les termes de direction tels que "au-dessus, au-dessous, en haut de, en bas de" renvoient généralement aux orientations indiquées sur les figures annexes, ou bien renvoient aux directions verticales, perpendiculaires ou de gravité des pièces elles-mêmes. De même, afin de faciliter la compréhension et la description, "à l'intérieur de" et "à l'extérieur de" renvoient à l'intérieur ou à l'extérieur de la silhouette de la pièce en question, toutefois, les termes de direction susmentionnés ne constituent en rien une limitation de la présente invention.

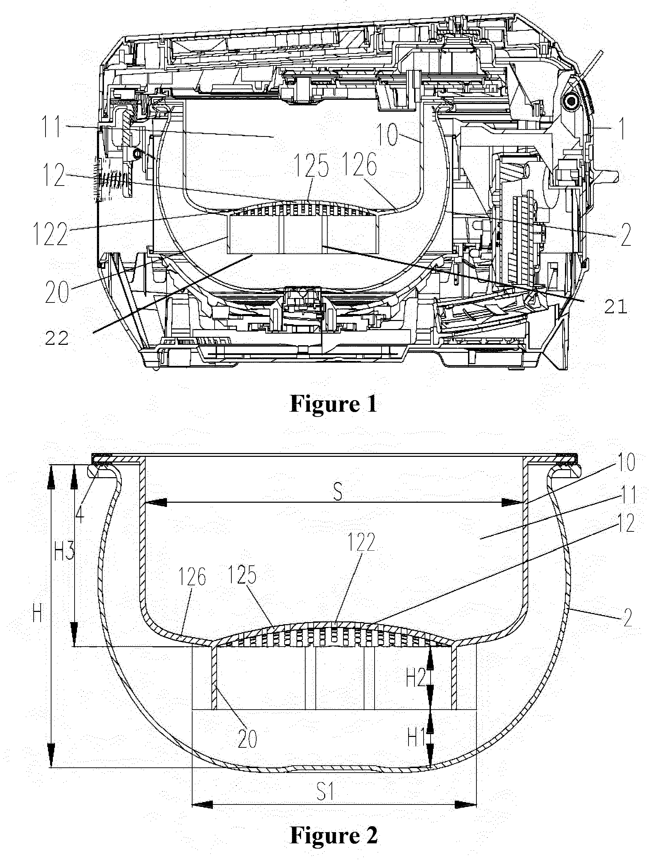

La présente invention est destinée à résoudre les difficultés techniques des cuiseurs électriques actuels de réalisation stable du processus de contact de l'eau et du riz ou de séparation de l'eau et du riz qui entraînent l'impossibilité de cuire un riz à indice glycémique (IG) bas. Comme le montre l'exemple d'application possible de la figure 1, le cuiseur électrique peut être un cuiseur à riz qui comporte un boîtier externe (1), un récipient interne (2) et un panier à vapeur, lequel panier à vapeur est installé à l'intérieur du récipient interne (2), et la partie supérieure du cylindre de remplissage (10) du panier à vapeur et l'ouverture du récipient interne (2) sont abouchées de manière hermétique.

Un joint d'étanchéité (4) est placé entre la partie supérieure du cylindre de remplissage (10) du panier à vapeur et l'ouverture du récipient interne (2).

Dans le mode d'application concret de la figure 2, le bord supérieur du cylindre de remplissage (10) est abouché au bord supérieur du récipient interne (2) au moyen du joint d'étanchéité (4).

Bien entendu, le cuiseur électrique de la présente invention peut être un cuiseur à riz, un four micro-ondes, un fait-tout électrique ou un cuiseur électrique sous pression. Le cuiseur électrique comporte en son sein le récipient interne (2), le joint d'étanchéité (4) et le panier à vapeur, lequel panier vapeur possède les spécificités ci-dessous.

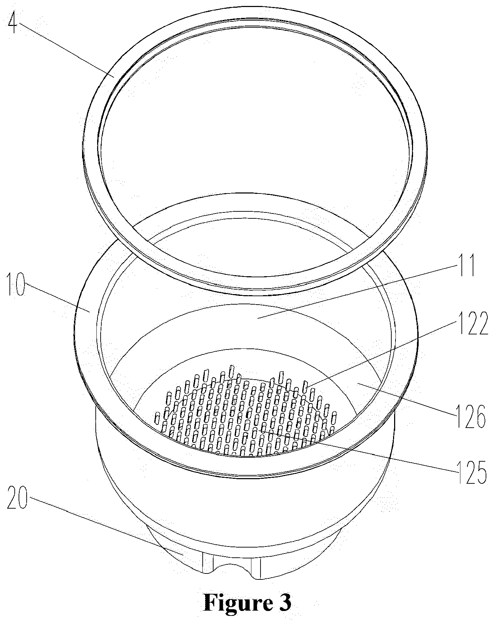

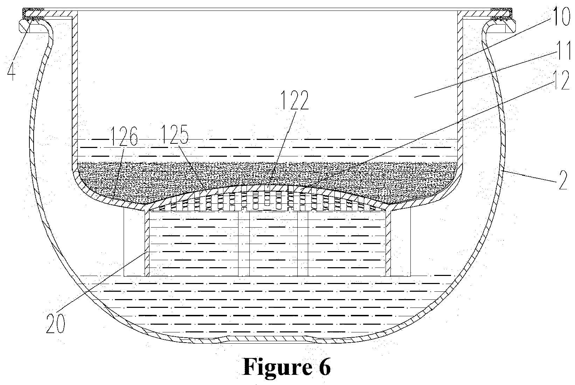

Comme l'indiquent les figures 2 à 6, le panier à vapeur comporte un cylindre de remplissage (10), lequel cylindre de remplissage (10) est pourvu d'une chambre de remplissage (11), et sur la paroi du fond (12) dudit cylindre de remplissage (10) se trouve une zone perméable. La zone perméable de la paroi du fond (12) est percée de plusieurs trous de passage de l'eau (122) qui traversent la paroi du fond (12). Un cylindre de passage de l'eau (20) est situé sous le cylindre de remplissage (10), le cylindre de passage de l'eau (20) et le cylindre de remplissage (10) formant une seule et même structure. L'extrémité du cylindre de passage de l'eau (20) opposée au cylindre de remplissage (10) comporte un mécanisme d'ouverture (22). La zone perméable est située sur la zone de la paroi du fond (12) entourée par le cylindre de passage de l'eau (20).

Etant donné que la paroi du fond (12) du cylindre de remplissage (10) comporte une zone perméable, l'eau se trouvant à l'intérieur du récipient interne (2), est, sous l'action de la pression, envoyée à travers les trous de passage de l'eau (122) de cette zone perméable jusque dans la chambre de remplissage (11) ou évacuée hors de la chambre de remplissage (11), de cette manière on peut ainsi réaliser de manière répétée le trempage et le rinçage du riz à l'intérieur de la chambre de remplissage (11), ceci afin de réduire la teneur en sucre du riz.

Après qu'on a placé le panier à vapeur dans le récipient interne (2), la partie supérieure du cylindre de remplissage (10) est hermétiquement abouchée à l'ouverture du récipient interne (2). Dans la phase préliminaire, le niveau de l'eau se trouvant à l'intérieur du récipient interne (2) est supérieur au mécanisme d'ouverture du cylindre de passage de l'eau (20), de sorte à former un espace hermétique entre le panier à vapeur et le récipient interne (2). Lorsqu'on chauffe le récipient interne (2), la pression à l'intérieur de l'espace hermétique croît, et l'eau est, sous l'action de la pression, envoyée à travers le cylindre de passage de l'eau (20) jusque dans la chambre de remplissage (11) pour entrer en contact avec le riz et réaliser le rinçage, le trempage, la cuisson à l'eau et l'absorption de l'eau par le riz, puis le niveau d'eau ayant baissé, lorsque l'eau se retire de la chambre de remplissage (11), l'eau est séparée du riz se trouvant dans la chambre de remplissage (11). Le processus de rinçage ou le processus de cuisson à l'eau du riz avec l'eau se trouvant dans le récipient interne (2) est ainsi mené à bien, on passe ensuite au processus suivant de cuisson à la vapeur du riz.

Il faut préciser que, lorsque le niveau de l'eau baisse jusqu'à atteindre le mécanisme d'ouverture du cylindre de passage de l'eau (20), l'espace hermétique entre le panier à vapeur et le récipient interne (2) n'est plus hermétique, cet espace désormais non-hermétique est relié à une cavité de passage de l'eau (21) et à la chambre de remplissage (11). La vapeur qui s'élève entre par le mécanisme d'ouverture dans la chambre de remplissage (11), ou bien après être entrée dans l'espace hermétique, entre ensuite par le mécanisme d'ouverture jusque dans la chambre de remplissage (11), pour procéder à la cuisson vapeur du riz. A ce moment-là, comme l'espace hermétique a perdu son hermétisme, la vapeur ne s'accumulera pas dans l'espace hermétique et la pression à l'intérieur de l'espace hermétique ne croîtra pas de manière continue. Autrement dit, la vapeur à l'intérieur de l'espace hermétique ayant perdu son hermétisme est incapable de comprimer l'eau hors du récipient interne pour l'envoyer dans la chambre de remplissage (11).

Dans l'usage du cuiseur électrique de la présente invention, le contrôle du nombre d'entrées ou de sorties de l'eau dans ou hors de la chambre de remplissage (11), de la température de l'eau et du temps de rétention de l'eau à l'intérieur de la chambre de remplissage permet au cuiseur électrique de réaliser de manière automatique le processus de rinçage du riz et d'absorption de l'eau par le riz, et en même temps les processus successifs de cuisson à l'eau puis cuisson à la vapeur du riz dans la chambre de remplissage (11) de manière que le cuiseur électrique cuise un riz à indice glycémique (IG) bas plus nutritif, et à augmenter le degré de satisfaction des consommateurs relativement au processus de cuisson. Aussi, le cuiseur électrique de la présente invention est multifonction, largement automatisé et pratique à l'usage.

Le cylindre de passage de l'eau (20) présente une forme tubulaire droite ou une forme conique. La fabrication des cylindres de passage de l'eau (20) de forme tubulaire est aisée. Le cylindre de passage de l'eau (20) ayant la forme conique permet de faire en sorte que la vapeur générée par l'eau bouillante se trouvant à l'intérieur du récipient interne (2) pénètre facilement et en grande quantité dans la chambre de remplissage (11), ce qui permet de raccourcir le temps de cuisson à la vapeur du riz se trouvant dans la chambre de remplissage (11) et d'améliorer ainsi le côté pratique du cuiseur électrique. Le cylindre de passage de l'eau (20) en forme conique permet de réduire la capacité de l'espace enfermé par le cylindre de passage de l'eau (20), ce qui permet à l'eau se trouvant à l'intérieur du récipient interne (2) d'entrer plus aisément à l'intérieur de la chambre de remplissage (11), et d'élever efficacement la hauteur du niveau de l'eau dans la chambre de remplissage (11) de manière à faciliter le trempage du riz dans la chambre de remplissage (11), et à améliorer ainsi le côté pratique du cuiseur électrique.

Le cylindre de passage de l'eau (20) est installé au centre géométrique de la paroi du fond (12). Ainsi, lorsque l'eau passe à travers le cylindre de passage de l'eau (20) jusque dans la chambre de remplissage (11), l'eau peut à l'heure programmée entrer rapidement et entièrement en contact avec le riz se trouvant à l'intérieur de la chambre de remplissage (11), de manière à réaliser le rinçage fiable du riz se trouvant dans la chambre de remplissage (11), et dans un même temps à garantir la constance d'absorption de l'eau par le riz dans la chambre de remplissage (11).

Par ailleurs, durant la phase de cuisson à la vapeur dans la chambre de remplissage (11), la vapeur peut passer par le cylindre de passage de l'eau (20) situé au centre géométrique de la paroi du fond (12) pour pénétrer uniformément dans la chambre de remplissage (11) et cuire de manière homogène le riz se trouvant à l'intérieur de la chambre de remplissage (11), ceci afin de garantir que les différentes couches de riz de la chambre de remplissage (11) soient cuites à la vapeur en même temps, et d'améliorer le côté pratique du cuiseur électrique.

Le cylindre de passage de l'eau (20) présente une symétrie axiale sur la projection orthogonale de la paroi du fond (12). Ainsi il est possible d'améliorer l'aspect esthétique du panier à vapeur et également le confort d'utilisation du cuiseur électrique par l'utilisateur. Par ailleurs, le cylindre de passage de l'eau (20) réduit la surface de contact entre le panier à vapeur et la surface plane destinée à le recevoir, ce qui permet d'économiser la surface occupée par le panier à vapeur, et d'améliorer l'aspect pratique du panier à vapeur. Le cylindre de passage de l'eau (20) peut présenter une symétrie axiale permettant de répartir de manière uniforme la force subie par le panier à vapeur, ce qui permet donc d'améliorer la stabilité du panier à vapeur lorsqu'il est sur une surface plane.

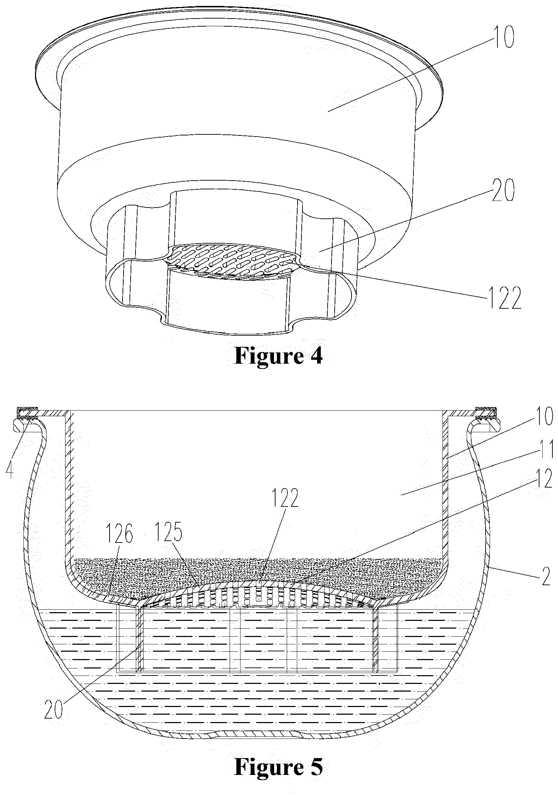

Comme indiqué sur la figure 4, le cylindre de passage de l'eau (20) présente une forme de fleur au moins à quatre pétales située sur la projection axiale de la paroi du fond (12).

La paroi du fond (12) présente une structure plate ou incurvée. Le panier à vapeur dont la paroi du fond (12) présente une structure plate a l'avantage d'être facile à fabriquer, ce qui réduit les coûts de revient de la fabrication des paniers à vapeur, dans un même temps cela permet de garantir que la profondeur du riz se trouvant dans la chambre de remplissage (11) soit partout égale, et donc que durant le processus de cuisson à la vapeur du riz, le riz soit cuit uniformément sur une couche de même niveau.

La paroi du fond (12) présentant une structure incurvée permet de satisfaire les besoins de divers autres utilisateurs.

Concrètement, en ce qui concerne les structures incurvées de la paroi du fond (12), la paroi du fond (12) présentant une structure incurvée est soit bombée du côté faisant face au cylindre de remplissage (10) soit bombée du côté opposé au cylindre de remplissage (10). La paroi du fond (12) présentant une structure incurvée bombée du côté faisant face au cylindre de remplissage (10) permet de faire en sorte que la profondeur du riz se trouvant sur la paroi du fond (12) soit progressivement réduite depuis les quatre bords jusqu'au centre, la quantité de riz se trouvant au centre de la paroi du fond (12) étant moindre, de sorte que la vapeur passera plus facilement à travers le riz se trouvant au centre de la paroi du fond (12) et pénétrera jusque dans l'espace de la chambre de remplissage (11) situé au-dessus de la couche de riz, ce qui permettra au riz de la couche supérieure se trouvant dans la chambre de remplissage (11) de cuire plus facilement à la vapeur, et on aura donc amélioré ainsi la fiabilité d'utilisation du cuiseur électrique. La paroi du fond (12) présentant une structure incurvée bombée dans le sens opposé à la chambre de remplissage (11) permet d'accroître la capacité effective de la chambre de remplissage (11), et d'augmenter ainsi la quantité de riz pouvant être contenue dans la chambre de remplissage (11).

Comme l'indiquent les exemples d'applications des figures 2, 5 et 6, la paroi du fond (12) comporte une zone centrale (125) située au centre de la paroi du fond (12) et une zone périphérique (126) qui entoure cette zone centrale (125), avec un côté de la zone centrale (125) bombé dans le sens opposé à la chambre de remplissage (11), et un côté de la zone périphérique (126) bombé vers la chambre de remplissage (11). Ainsi, en augmentant la capacité effective de la chambre de remplissage (11), la vapeur passe plus facilement à travers le riz se trouvant sur la zone centrale (125) de la paroi du fond (12) et pénètre jusque dans l'espace de la chambre de remplissage (11) situé au dessus de la couche de riz, ce qui permet à la couche supérieure du riz se trouvant dans la chambre de remplissage (11) d'être plus aisément cuite à la vapeur. Et la zone périphérique (126) peut accueillir davantage de riz, on améliore ainsi la commodité d'utilisation du cuiseur électrique.

Les trous de passage de l'eau (122) sont de forme ronde, ovale, de noix de cajou, ou polygonale. Ils peuvent soit présenter tous la même forme soit ils mêlent plusieurs de ces formes. Ainsi, la forme et la taille rationnelles des trous de passage de l'eau (122) permettent, lorsque l'eau se trouvant dans le récipient interne (2) est envoyée sous l'action de la pression à travers les trous de passage de l'eau (122), de faire en sorte que les grains de riz de petite taille passent à travers les trous de passage de l'eau (122) pour être emmenés jusque dans la chambre de remplissage (11), et, dans un même temps, permettent d'éviter que l'eau n'emporte les grains de riz de taille importante jusque dans le récipient interne (2) et donc tout gaspillage de riz. On améliore ainsi la commodité d'utilisation du panier à vapeur.

Selon un exemple d'application non illustré, le panier à vapeur comprend encore plusieurs renforcements, lesquels renforcements sont situés sur la surface du côté de la paroi du fond (12) opposé à la chambre de remplissage (11) et sont disposés dans le prolongement du rayon de la paroi du fond (12). Ces multiples renforcements sont situés de part et d'autre du périmètre du cylindre de passage de l'eau (20) et séparés par celui-ci. Ainsi on parvient à renforcer efficacement la structure de la paroi du fond (12), à éviter que la paroi du fond (12) qui est soumise pendant de longues durées à l'impact de l'eau et de la vapeur ne se déforme, et donc à rallonger la durée de vie du panier à vapeur.

Dans la structure d'assemblage du panier à vapeur et du récipient interne (2) de la présente invention, afin de garantir que l'eau se trouvant à l'intérieur du récipient interne (2) entre dans ou sorte correctement de la chambre de remplissage (11), de manière à ce que le cuiseur électrique réalise sans encombre les processus de rinçage du riz, d'absorption de l'eau par le riz, de cuisson à l'eau du riz et de cuisson vapeur du riz, et pour produire un récipient interne (2) et un panier à vapeur de structure rationnelle, la présente invention a établi certaines restrictions paramétriques essentielles relativement aux dimensions du récipient interne (2) et du panier à vapeur, qui sont concrètement les suivantes :
Comme le montre la figure 2, le rapport de la surface d'ouverture S1 du mécanisme d'ouverture et la section transversale S de la chambre de remplissage (11) est supérieur ou égal à 0,05 et inférieur ou égal à 1,5.

Selon une autre variante, le rapport de la surface d'ouverture S1 du mécanisme d'ouverture et la section transversale S de la chambre de remplissage (11) est supérieur ou égal à 0,3 et inférieur ou égal à 0,8.

Comme le montre la figure 2, le rapport entre la hauteur H1 allant du mécanisme d'ouverture du cylindre de passage de l'eau (20) du panier à vapeur jusqu'au fond du récipient interne (2) et la profondeur H du récipient interne (2) est supérieur ou égal à 0,1 et inférieur ou égal à 0,8.

Selon une autre variante, la paroi du fond (12) du cylindre de remplissage (10) du panier à vapeur présente une structure plate ou incurvée, et le rapport entre la hauteur H2 allant de l'ouverture du cylindre de passage de l'eau (20) jusqu'au point le plus bas de la zone perméable de la paroi du fond (12) et la profondeur H du récipient interne (2) est supérieur ou égal à 0,1 et inférieur ou égal à 0,8.

Dans un exemple d'application non illustré, la paroi du fond (12) présente une structure plate, le rapport entre la distance allant de la paroi du fond (12) à structure plate jusqu'au bord supérieur du récipient interne (2) et la profondeur H du récipient interne (2) est supérieur ou égal à 0,1 et inférieur ou égal à 0,8.

Comme l'indique la figure 2, la paroi du fond (12) présente une structure incurvée, le rapport entre la hauteur H3 allant du point le plus bas de la zone perméable présentant une surface incurvée jusqu'au bord supérieur du récipient interne (2) et la profondeur H du récipient interne (2) est supérieur ou égal à 0,1 et inférieur ou égal à 0,8.

Il faut noter que les termes techniques employés ici sont uniquement destinés à décrire des modes d'applications concrets, et non à limiter les modes d'applications fournis à titre d'exemples selon la présente demande. Il faut aussi comprendre que l'usage dans la présente description des termes "comporter" et/ou "inclure" implique qu'il existe des caractéristiques, étapes, tâches, composants, pièces et/ou des éléments les constituant.

Il faut préciser que les termes techniques "premier(ère)" et "second(e)" employés dans la description, les revendications, et les figures annexes de la présente demande servent à distinguer des phénomènes semblables et non à décrire une séquence spécifique ou un ordre d'antériorité-postériorité. Il faut comprendre que les données utilisées ainsi peuvent, dans des conditions appropriées, être interchangées.

Les exemples mentionnés plus haut constituent uniquement des exemples d'applications préférables de la présente invention, ils ne constituent en rien une restriction.

## Revendications

1. Cuiseur électrique comprenant un panier à vapeur qui comprend :
- un cylindre de remplissage (10), lequel cylindre de remplissage (10) étant pourvu d'une chambre de remplissage (11), et une paroi du fond (12) dudit cylindre de remplissage (10) comprenant une zone perméable ; la zone perméable de la paroi du fond (12) étant percée de plusieurs trous de passage de l'eau (122) qui traversent la paroi du fond (12) ;
- un cylindre de passage de l'eau (20) situé sous le cylindre de remplissage (10), le cylindre de passage de l'eau (20) et le cylindre de remplissage (10) formant une seule et même structure ; l'extrémité du cylindre de passage de l'eau (20) opposée au cylindre de remplissage (10) comprenant un mécanisme d'ouverture ; la zone perméable étant située sur la zone de la paroi du fond (12) entourée par le cylindre de passage de l'eau (20) ;
**caractérisé en ce qu'**il comprend un boîtier externe (1), un récipient interne (2) disposé à l'intérieur du boîtier externe (1), le panier à vapeur étant installé à l'intérieur du récipient interne (2), la partie supérieure du cylindre de remplissage (10) de ce panier à vapeur étant hermétiquement abouchée à l'ouverture du récipient interne (2).

2. Cuiseur électrique selon la revendication 1, **caractérisé en ce que** le cylindre de passage de l'eau (20) présente une forme tubulaire droite ou une forme conique.

3. Cuiseur électrique selon la revendication 1 ou 2, **caractérisé en ce que** le cylindre de passage de l'eau (20) est installé au centre géométrique de la paroi du fond (12).

4. Cuiseur électrique selon l'une des revendications précédentes, **caractérisé en ce que** le cylindre de passage de l'eau (20) présente une symétrie axiale avec la projection orthogonale de la paroi du fond (12).

5. Cuiseur électrique selon l'une des revendications précédentes, **caractérisé en ce que** la paroi du fond (12) présente une structure plane.

6. Cuiseur électrique selon l'une des revendications 1 à 4, **caractérisé en ce que** la paroi du fond (12) présente une structure incurvée, et un côté de la paroi du fond (12) présentant une structure incurvée étant bombé vers ou dans la direction opposée à la chambre de remplissage (11).

7. Cuiseur électrique selon l'une des revendications précédentes, **caractérisé en ce que** le rapport entre la surface d'ouverture S1 du mécanisme d'ouverture et la section transversale S de la chambre de remplissage (11) du cylindre de remplissage (10) est supérieur ou égal à 0,05 et inférieur ou égal à 1,5.

8. Cuiseur électrique selon l'une des revendications précédentes, **caractérisé en ce que** le rapport de la surface d'ouverture S1 du mécanisme d'ouverture et la section transversale S de la chambre de remplissage (11) du cylindre de remplissage (10) est supérieur ou égal à 0,3 et inférieur ou égal à 0,8.

9. Cuiseur électrique selon la revendication 1, **caractérisé en ce qu'**un joint d'étanchéité (4) est placé entre la partie supérieure du cylindre de remplissage (10) du panier à vapeur et l'ouverture du récipient interne (2).

10. Cuiseur électrique selon la revendication 1 ou 9, **caractérisé en ce que** le rapport entre la hauteur H1 allant du mécanisme d'ouverture (22) du cylindre de passage de l'eau (20) du panier à vapeur jusqu'au fond du récipient interne (2) et la profondeur H du récipient interne (2) est supérieur ou égal à 0,1 et inférieur ou égal à 0,8.

11. Cuiseur électrique selon l'une des revendications 1, 9 ou 10, **caractérisé en ce que** la paroi du fond (12) du panier à vapeur présente une structure plate ou incurvée, et le rapport entre la hauteur H2 allant du mécanisme d'ouverture du cylindre de passage de l'eau (20) jusqu'au point le plus bas de la zone perméable de la paroi du fond (12) et la profondeur H du récipient interne (2) est supérieur ou égal à 0,1 et inférieur ou égal à 0,8.

12. Cuiseur électrique selon l'une des revendications 1, 9 à 11, **caractérisé en ce que** la paroi du fond (12) du panier à vapeur présente une structure plate ou incurvée, et le rapport entre la hauteur H3 allant du point le plus bas de la zone perméable de la paroi du fond (12) jusqu'au bord supérieur du récipient interne (2) et la profondeur H du récipient interne (2) est supérieur ou égal à 0,1 et inférieur ou égal à 0,8.
